# EUROPEAN PATENT APPLICATION

(11) **EP 2 996 304 A1**
(43) Date of publication of application: **16.03.2016**
(21) Application number: 15183685.5
(22) Date of filing: 03.09.2015
(51) Int. Cl.: H04L 29/06, G06F 21/57

(54) **APPARATUSES, METHOD AND SYSTEMS FOR A CYBER SECURITY ASSESSMENT MECHANISM**

(30) Priority: 15.09.2014 US 201414486955
(71) Applicant: Lookingglass Cyber Solutions, Baltimore, MA 21224 (US)
(72) Inventor: COLEMAN, Christopher D., Centreville, VA Virginia 20120 (US); THOMSON, Allan, Pleasanton, CA California 94566 (US); LEWIS, Jason A., Baltimore, MD Maryland 21209 (US)
(74) Representative: Gill Jennings & Every LLP

(57) **Abstract**

The cyber security assessment mechanism system is disclosed, including a first cyber threat intelligence processing component to calculate a cyber threat indicator confidence score associated with at least one of a cyber threat indicator or a network element after the cyber threat indicator is received. The cyber security assessment further includes a cyber security index component to generate a cyber threat index value for the cyber network based on the cyber threat indicator confidence score associated with the network elements after the cyber threat indicator confidence score is associated. The cyber security index component further sends the cyber threat index value for the cyber network, to a second cyber threat intelligence processing component disposed at a remote location from the data center such that the second cyber threat processing component generates a user interface visualization representing the cyber threat index value.

## Description

This application may contain material that is subject to copyright, mask work, and/or other intellectual property protection. The respective owners of such intellectual property have no objection to the facsimile reproduction of the disclosure by anyone as it appears in published Patent Office file/records, but otherwise reserve all rights.

### FIELD

Some embodiments described herein generally relate to apparatuses, methods, and systems for a cyber threat intelligence management mechanism, and more particularly, relate to a cyber security assessment mechanism ("CSRA").

### BACKGROUND

Cyber analysts and security operations personnel want to determine how safe a network is, such as their corporate network, partner network or other networks that may be connected to their infrastructure under their control. A type of cyber risk includes computer malware, which can send malicious code programs over a network to a computer so as to burden the processing capacity of the computer, gain access to secured data without authorization, or modify critical system settings. The Internet topology, and how often cyber risk is associated with a network element of the Internet can change constantly.

### BRIEF DESCRIPTION OF THE DRAWINGS

The accompanying appendices, drawings, figures, images, etc. illustrate various example, non-limiting, inventive aspects, embodiments, and features ("e.g.," or "example(s)") in accordance with the present disclosure.
FIG. 1 provides a schematic block diagram of a communication network system in which CSRA aspects can be provided, according to an embodiment.
FIG. 2A is a schematic illustration of CSRA site deployment of a site processor, report processor, telemetry processor and/or other related components, according to an embodiment.
FIGs. 2B-2C are schematic illustrations of CSRA site deployment showing interaction between a site processor, report processor, telemetry processors and third party data or service providers via an Application Programming Interface (API), according to an embodiment.
FIGs. 2D-2E are schematic illustrations of example information service bundle(s) at CSRA site deployment, according to an embodiment.
FIG. 3A is a schematic block diagram illustrating aspects of data flows at a core processor at a central location, according to an embodiment.
FIG. 3B is a logic flow diagram illustrating aspects of work flow of a core processor, according to an embodiment.
FIGs. 4A-4B are example block diagrams illustrating aspects of organizational structures, according to an embodiment.
FIG. 5 (including FIGs. 5-(1) and 5-(2)) is an example block diagram illustrating aspects of network architecture of a CSRA system, according to an embodiment.
FIG. 6 is an example user interface plot illustrating aspects of a CSRA-report processor-generated cyber risk assessment user interface, according to an embodiment.

### SUMMARY

In one embodiment, a cyber security assessment mechanism system is disclosed. The cyber security assessment mechanism includes a first cyber threat intelligence processing component, disposed at a network-accessible compute device. The first cyber threat intelligence processing component calculates a cyber threat indicator confidence score associated with at least one of a cyber threat indicator or a network element after the cyber threat indicator is received. The cyber security assessment further includes a cyber security index component, at the data center, communicatively coupled to the first cyber threat processing component. The cyber security index component associates the cyber threat indicator confidence score with a network element of a cyber network based on the network topology information after the network topology information is obtained. The cyber security index component generates a cyber threat index value for the cyber network based on the cyber threat indicator confidence score associated with the network elements after the cyber threat indicator confidence score is associated. The cyber security index component further sends the cyber threat index value for the cyber network, after the cyber threat index value is generated, to a second cyber threat processing component disposed at a remote location from the data center such that the second cyber threat processing component receives the cyber threat index value for the cyber network, and generates a user interface visualization representing the cyber threat index value.

### DETAILED DESCRIPTION

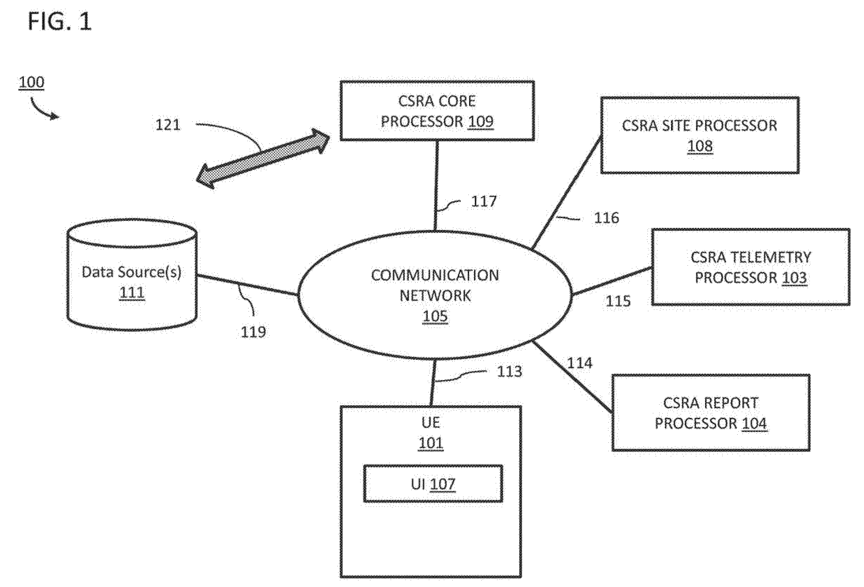

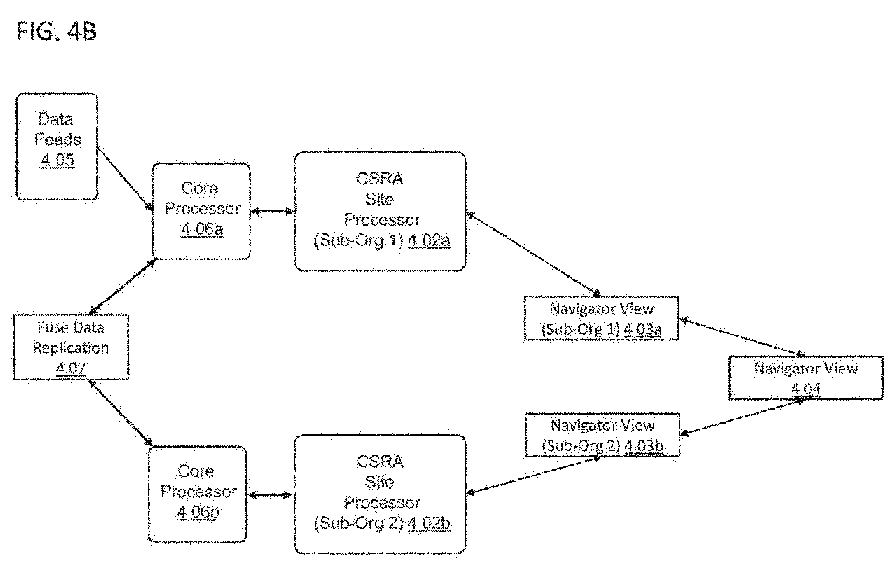

In some embodiments, a cyber security assessment mechanism (hereinafter "CSRA") provides a system to assess cyber health of a network, such as the global Internet. In some instances, the CSRA provides an infrastructure to collect and analyze cyber threat information, and to provide a cyber threat report through a user interactive user interface for a client to view and/or edit cyber threat analytics results. In some instances, the CSRA can protect an organization's information assets against cyber threats via cyber threat intelligence management, which may include a variety of data analytics and heuristics to tailor the organization's network environment, and/or the like. For example, a cyber threat intelligence processing component (e.g., see CSRA core processor 109 in FIG. 1, etc.) can receive time sensitive live data feed(s) (e.g., 405 in FIG. 4B) from multiple sources for security monitoring of computer networks, systems and devices. The data feed(s) can represent information, for example, on active threats, source reputations and indicators of attack. The security monitoring can include, for example, include vulnerability assessments, digital forensics, intrusion detection and network behavior analysis on the computer networks, systems and devices.

In some instances, the CSRA can protect an organization's information assets against cyber threats via cyber threat intelligence management, which may include a variety of data analytics and heuristics to monitor and analyze the organization's network environment, and/or the like. For example, a cyber threat intelligence processing component (e.g., see CSRAcore processor 109 in FIG. 1, etc.) can receive time sensitive live data feed(s) (e.g., 405 in FIG. 4B) from multiple sources for security monitoring of computer networks, systems and devices. The data feed(s) can represent information, for example, on active threats, source reputations and indicators of attack. The security monitoring can include, for example, include vulnerability assessments, digital forensics, intrusion detection and network behavior analysis on the computer networks, systems and devices.

In some instances, the CSRA system can collect global Internet topology information, collect and fuse multiple intelligence feeds from various data sources relating to network security, and associate those feeds with the Internet topology and a cyber health index score. The cyber health index score (or a threat indicator confidence score, as used interchangeably throughout the application), is calculated as a rating of the severity of a threat indicator. Such threat indicator confidence score can be calculated as associated with an independent threat incident, and/or associated with a network element because the threat incident can promulgate through the elements of the network. A network element or set of network elements can include any hardware, software, functional modules, routing topology, and/or the like, of a network. The network element or a set of network elements can have an associated threat indicator confidence score, which represents how threatening the particular network element, or set of network elements is. For example, a threat indicator confidence score can be associated with all network elements that have threat indicators associated with them, including an IP host, classless inter-domain routing (CIDR), fully qualified domain name (FQDN), autonomous system number (ASN), and/or the like. In another example, a threat indicator confidence score can be associated with any user-defined entities, which can be groups of network elements such as CIDR, FQDN, ANS, and/or the like. For example, a user-defined entity "Fedex" can be a group of CIDRs, ASNs, Domains, IPs, and/or the like. After the CSRA system calculates the cyber health index score at a core processor (e.g., deployed at a server at the CSRA assessment center, etc.), the scores and other data are then distributed to multiple customer views on a site processor (e.g., deployed at a client site, etc.), where customers can view and/or make changes that provide feedback to the CSRA assessment center.

In some instances, at the core processor 305, the threat indicator confidence can be associated with different classes of objects. For example, a threat indicator confidence can be associated with all threat indicators. As another example, a threat indicator confidence can be associated with all network elements that have threat indicators associated with them, including an IP host, classless inter-domain routing (CIDR), fully qualified domain name (FQDN), autonomous system number (ASN), and/or the like.

FIG. 1 provides a schematic block diagram of a communication network system in which CSRA aspects can be provided, according to an embodiment. A communication network system 100 can include one or more user devices or user equipments (UEs) 101, each equipped with at least a user interface (UI) 107; one or more CSRA core processor(s) 109; one or more CSRA site processor(s) 108; one or more CSRA telemetry processor(s) 103; one or more CSRA report processor(s) 104; one or more data source(s) or databases 111. Any of the devices or processors of the network system 100 can be equipped with local memory/storage spaces (not shown in FIG. 1). Furthermore, the devices and processors of the network system 100 may have access to centralized or distributed memory/storage spaces (not shown in FIG. 1) through the communication network 105. Thus, FIG. 1 is merely an example illustrating the types of devices and processors that can be included within a communication network system 100.

Communication network 105 can be any communication network, such as the Internet, configurable to allow the one or more UEs 101, the one or more CSRA core processor(s) 109, one or more CSRA site processor(s) 108, one or more CSRA telemetry processor(s) 103, one or more CSRA report processor(s) 104 to communicate with communication network 105 and/or to each other through communication network 105. Communication network 105 can be any network or combination of networks capable of transmitting information (e.g., data and/or signals) and can include, for example, a telephone network, an Ethernet network, a fiber-optic network, a wireless network, and/or a cellular network.

In some instances, communication network 105 can include multiple networks operatively coupled to one another by, for example, network bridges, routers, switches and/or gateways. For example, the UEs 101 can be operatively coupled to a cellular network; and the CSRA site processor(s) 108 can be operatively coupled to a fiber-optic network. The cellular network and fiber-optic network can each be operatively coupled to one another via one or more network bridges, routers, switches, and/or gateways such that the cellular network, the Ethernet network and the fiber-optic network are operatively coupled to form a communication network. Alternatively, the cellular network and fiber-optic network can each be operatively coupled to one another via one or more additional networks. For example, the cellular network and the fiber-optic network can each be operatively coupled to the Internet such that the cellular network, the fiber-optic network and the Internet are operatively coupled to form a communication network.

As illustrated in FIG. 1, UEs 101 are operatively coupled to communication network 105 via network connection(s) 113; CSRA report processor(s) 104 are operatively coupled to communication network 105 via network connection(s) 114; CSRA telemetry processor(s) 103 are operatively coupled to the communication network 105 via network connection(s) 115; CSRA site processor(s) 108 are operatively coupled to communication network 105 via network connection(s) 116; CSRA core processor(s) 109 are operatively coupled to communication network 105 via network connection(s) 117; and data source(s) 111 are operatively coupled to communication network 105 via network connection(s) 119. Network connections 113, 114, 115, 116, 117, and 119 can be any appropriate network connection to operatively couple UEs 101, CSRA report processor(s) 104, CSRA telemetry processor(s) 103, CSRA site processor(s) 108, CSRA core processor(s) 109 and the data source(s) 111. Furthermore, the CSRA core processor(s) 109 can have a direct connection to the data source(s) 111 via communication 121.

A network connection can be a wireless network connection such as, for example, a wireless fidelity ("Wi-Fi") or Wireless Local Area Network ("WLAN") connection, a Wireless Wide Area Network ("WWAN") connection, and/or a cellular connection. A network connection can be a wired connection such as, for example, an Ethernet connection, a Digital Subscription Line ("DSL") connection, a broadband coaxial connection, and/or a fiber-optic connection.

As mentioned above, in some instances, a communication network system 100 can include more than one UE 101, more than one CSRA core processor(s) 109, and more than one data source 111. A UE 101, and/or a CSRA core processor 109, can be operatively coupled to the communication network 105 by heterogeneous network connections. For example, a first UE 101 can be operatively coupled to the communication network 105 by a WWAN network connection, another UE 101 can be operatively coupled to the communication network 105 by a DSL network connection, and a CSRA core processor 109 can be operatively coupled to the communication network 105 by a fiber-optic network connection.

The CSRA core processor(s) 109 and/or the CSRA site processor 108 each can include, for example, a processor at a web server, a processor at a remote server, and/or the like, configured to provide cyber threat analytics to electronic devices, such as UEs 101. The UE 101 can be in communication with the CSRA core processor(s) 109 via the communication network 105, and/or with the CSRA site processor(s) 108 via the communication network 105.

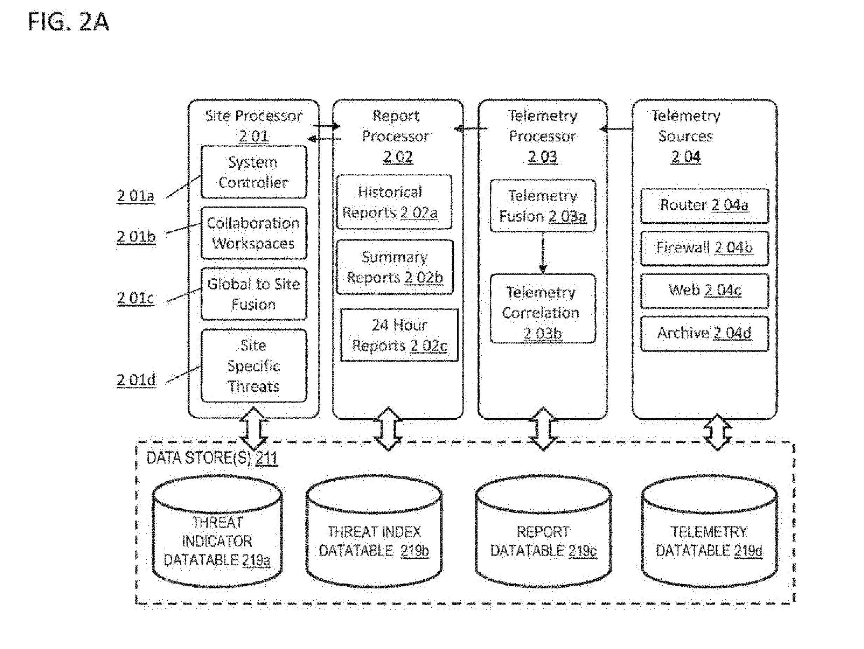

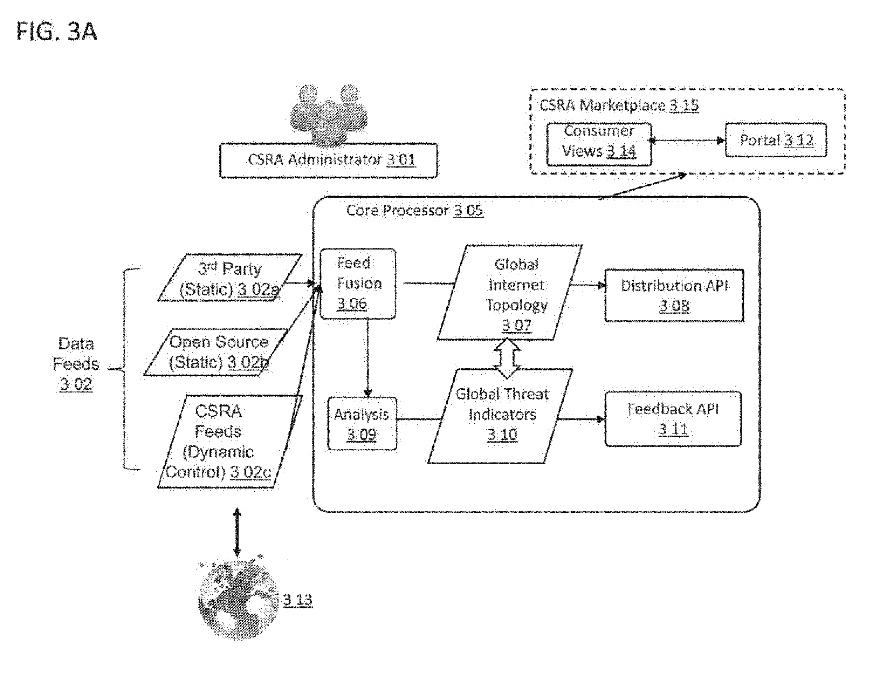

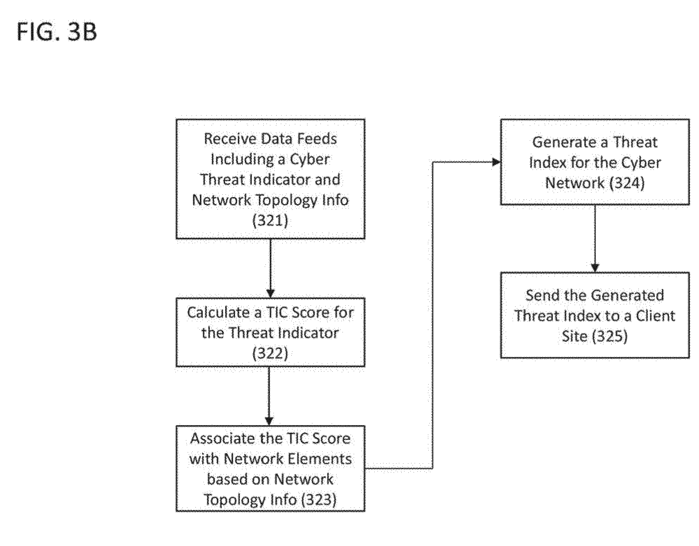

In one implementation, the CSRA core processor(s) 109, the CSRA site processor 108, the CSRA telemetry processor 103, and/or the CSRA report processor 104 each can be a remote server housed separately from the UE 101. For example, the UE 101 can receive a signal representing a threat indicator confidence score (e.g., a numeric value that is calculated to represent a rating of the severity of the threat indicator, etc.) from the CSRA core processor 109 via the communication links 117, or can receive a signal representing a cyber threat analytics report from the CSRA report processor 104 via communication links 114. In another implementation, the CSRA site processor 108 and/or the CSRA report processor 104 can be integrated with the UE 101, where the report can be directly presented at the UI 107 on UE 101. The report of cyber threat analytics can be generated at the CSRA report processor 104 using threat indicator confidence scores calculated at the CSRA core processor 109. A detailed discussion of functionalities and data exchange of and in between the processors 103, 104, 108 and 109 is provided in FIG. 2A and 3.

The UEs 101 can be any of a variety of electronic devices that can be operatively coupled to communication network 105. A UE 101 can be, for example, a personal computer, a tablet computer, a personal digital assistant (PDA), a cellular telephone, a portable/mobile internet device, television, kiosk display, display screens in vehicles, projection devices, laser display devices, digital display watches, digital display glasses and/or some other electronic communication device with audio and/or visual capabilities. A UE 101 can also be, for example, a television set, a streamer device, a set top box, or any other electronic device equipped with a display unit (a UI 107) and an interface to a network connection 113 that enables the device to run applications on an operating system. The UEs 101 each can include or implement a web browser configured to access a webpage or website, for example, hosted on or accessible via the CSRA site processor 108 over communication network 105. The UEs 101 can be, for example, configured to support, for example, Hyper Text Markup Language (HTML) using JavaScript. For example, the UEs 101 can include or implement a web browser, such as, Firefox® , Safari® , Dolphin® , Opera®, Internet Explorer (IE) ®, Chrome® and/or similar browsers. An Internet page or website can be accessed by a user of a web browser at a UE 101 by providing the web browser with a reference such as a uniform resource locator (URL), for example, of a webpage. For example, a user of a UE 101 can access a CSRA core processor 109 via a URL designated for the CSRA core processor 109. In some instances, UEs 101 each can include specialized software other than a web browser for accessing a web server such as, for example, a server hosting the CSRA core processor 109. Specialized software can be, for example, a specialized network-enabled application or program. In some instances, portions of a website accessible via a web server can be located in a local or remote memory space/data store accessible to the web server. A UE 101 can also include a display, monitor or user interface (UI) 107, a keyboard, various ports (e.g., a USB port), and other user interface features, such as, for example, touch screen controls, audio components, and/or video components (each not shown). For example, the UE 101 may be operated and/or accessed by a user (e.g., a cyber analyst, etc.) to obtain cyber threat analytics report.

Data source(s) 111 can be distributed sources of data throughout the communication network system 100. A data source 111 can be at least one or more of a database, a data warehouse, a file, etc. For example, the data source(s) can include a variety of network security monitoring systems, hosted by the CSRA and/or a third party, which provide intelligence feeds relating to cyber threat information and network performance (e.g., see 302 in FIG. 3).

FIG. 2A is a schematic illustration of CSRA site deployment of a site processor, report processor, telemetry processor and/or other related components, according to an embodiment. The site processor 201, report processor 202, and telemetry processor 203 can be similar to 108, 104 and 103 in FIG. 1, respectively. As shown in FIG. 2A, an example CSRA site deployment, which may be housed at one or more client site(s), can include a site processor 201, a report processor 202, a telemetry processor 203 that interacts with one or more telemetry sources 204. A data store(s) 211 can include a threat indicator datatable 219a, a threat indicator index datatable 219b, a report datatable 219c, a telemetry datatable 219, and/or the like.

In some instances, the site processor 201 can be owned by an organization that has subscribed to the CSRA core processor system (e.g., as further discussed in FIG. 3). In another example, the site processor 201 can be hosted by a provider and supports one or more customer's environment(s), e.g., via Software as a Service (SaaS) instead of owned by an entity. The site processor 201 communicates with the core processor (e.g., 109 in FIG. 1), as discussed in Fig. 1. The site processor 201 provides a view of the global Internet from a local perspective for the organization. For example, the site processor 201 can include a system controller 201a that controls data communication with a core processor, and/or controls collaboration workspaces 201b. The site processor 201 can receive global Internet threat indicator score data (e.g., in the format of fuse files, etc.) from the CSRA core processor(s) and ingest the data such that the user can have a local view of the threat indicator confidence scores, e.g., via a global to site fusion module 201c. For example, the site fusion module 201c may sort and arrange the threat indicator confidence score data based on threat indicator types, time of receipt, level of severity, source(s), and/or the like, and send the arranged score data to the report processor 202 to generate various cyber threat reports. The site processor 201 may store the global Internet threat indicator score data (e.g., fuse files, etc.) and/or the sorted threat indicator confidence score data at the threat indicator datatable 219a, and the threat index datatable 219b, respectively.

The site processor 201 can allow users to view all contributing threat indicators for a network element and also the threat indicator confidence score associated with each indicator. The users can also see how that threat indicator score for the network element is derived, e.g., the network topology, etc. The site Processor 201 provides a threat indicator score editing user interface, which allows users to modify a threat indicator score by changing the score on a network element, and/or changing the criticality rating, classification rating or source rating associated with the threat indicator. Upon receiving user modifications, the site processor 201 may automatically feed those changes to the core processor (e.g., 109 in FIG. 1) such that the core processor can automatically incorporate user submitted changes on the threat indicator confidence scores that are obtained from multiple site processors and update/recalculate the threat indicator confidence scores.

In some instances, the site processor 201 may monitor or ingest site specific threat intelligence via a site specific threats module 201d. For example, an organization can monitor a type of the cyber threat intelligence monitor a cyber threat obtained from a certain source, and/or the like. A larger organization may deploy multiple site processors 201, e.g., depending on the number of users and how much of the global Internet the organization wishes to monitor at the organization.

In some instances, the report processor 202 includes reporting capability that processes data flowing from the site processor 201 and generates summarized reports (e.g., 202b) and/or historical reports (e.g., 202a) based on data obtained from the site processor 201. For example, the report processor 202 may include a historical reports module 202a, a summary reports module 202b, a twenty-four hour monitor reports module 202c, and/or the like, to generate different types of reports of cyber threats, respectively. The report processor 202 may store the generated cyber threat reports at a report datatable 291c.

In some instances, the telemetry processor 203 includes a capability to ingest local security telemetry in a scalable manner across the organization's network, e.g., from a variety of telemetry sources 204 such as, but not limited to router(s) of the network 204a, firewall(s) 204b, web activities 204c, archive(s) 204d, and/or the like. The telemetry fusion module 2o3a can fuse various telemetry data and supply the fused telemetry data to the telemetry correlation module 203b. The telemetry correlation module 203b may then correlate the collected telemetry that have related attributes and/or characteristics, e.g., data messages originated from and/or destinating at a same Internet Protocol (IP) address, suspicious activity data that is associated with the same network element, and/or the like. The telemetry correlation module 203b correlates network telementry to global and local threat intelligence indicators and provides annotation of the telemetry to the report processor so that users can generate reports on their network telementry for global cyber threat intelligence. The correlated telemetry data may be stored at the telemetry datatable 219d.

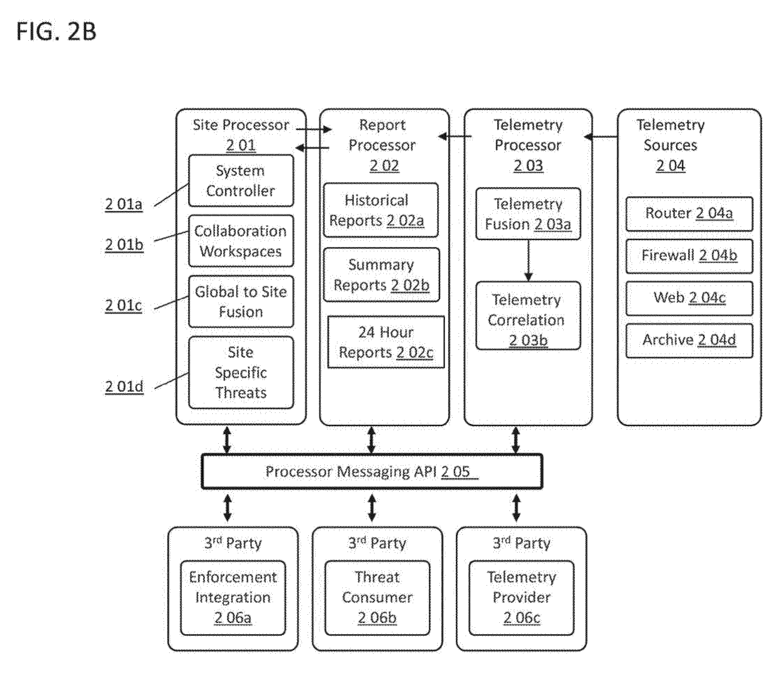

FIGs. 2B-2C are schematic illustrations of the CSRA site deployment (as shown in FIG. 2A) showing interaction between a site processor, report processor, telemetry processor and third party data or service providers via an Application Programming Interface (API), according to an embodiment. As shown in FIG. 2B, the site processor 201, report processor 202, telemetry processor 203 (as further discussed in FIG. 2A), may receive data from various third party data vendors via a processor messaging API 205. For example, the site processor 201 and/or the report processor 202 may obtain data relating to cyber threats from a compute device at a third party enforcement and/or integration data vendor 206a, a compute device at a consumers data vendor 206b, and/or the like. In another example, the telemetry processor 203 may receive telemetry from a compute device at a third party telemetry provider 206c.

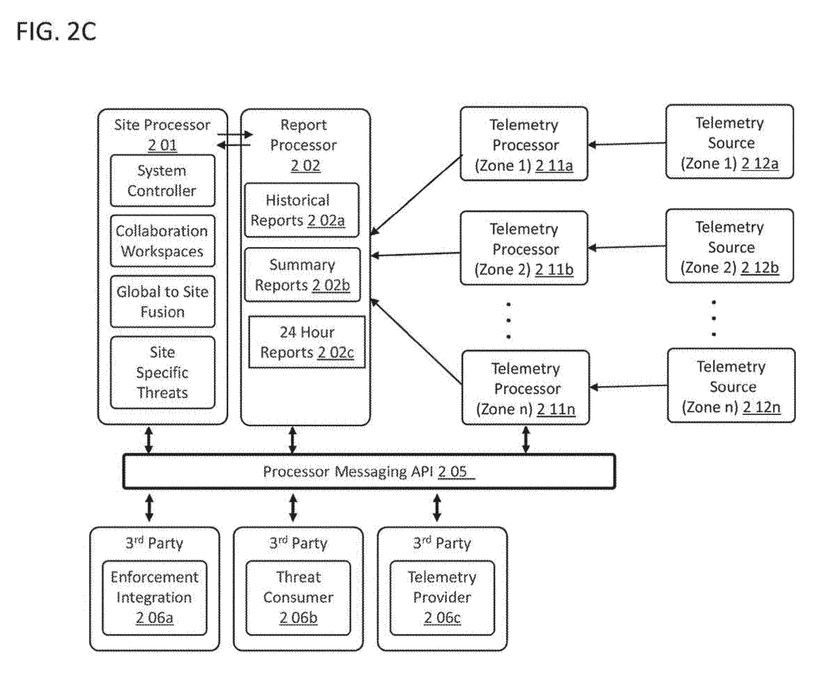

As shown in FIG. 2C, multiple telemetry processor(s) 211a-n can be employed by one or more organizations, and each of which can receive telemetry data from a telemetry source (e.g., 212a-n) from a different zone of the network, respectively.

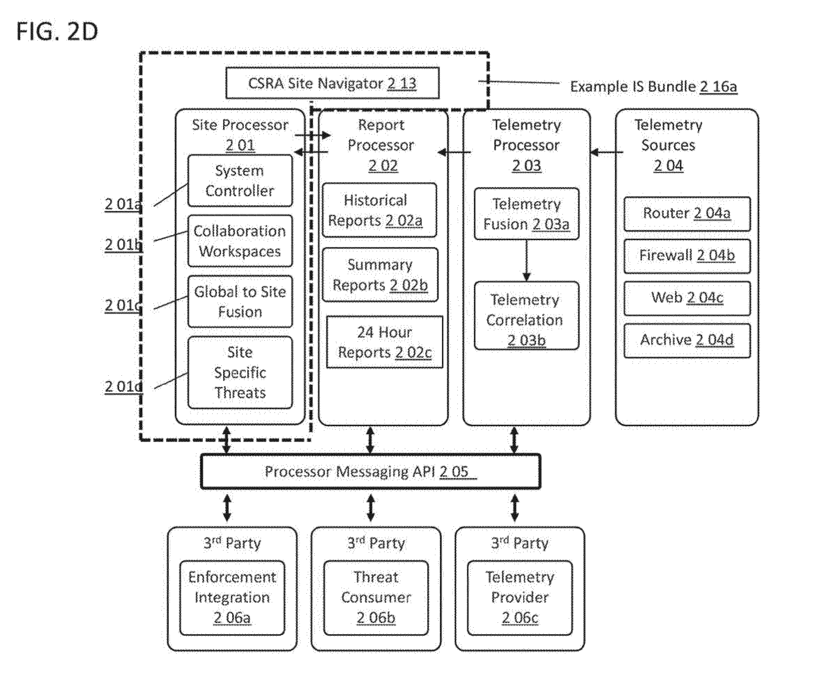

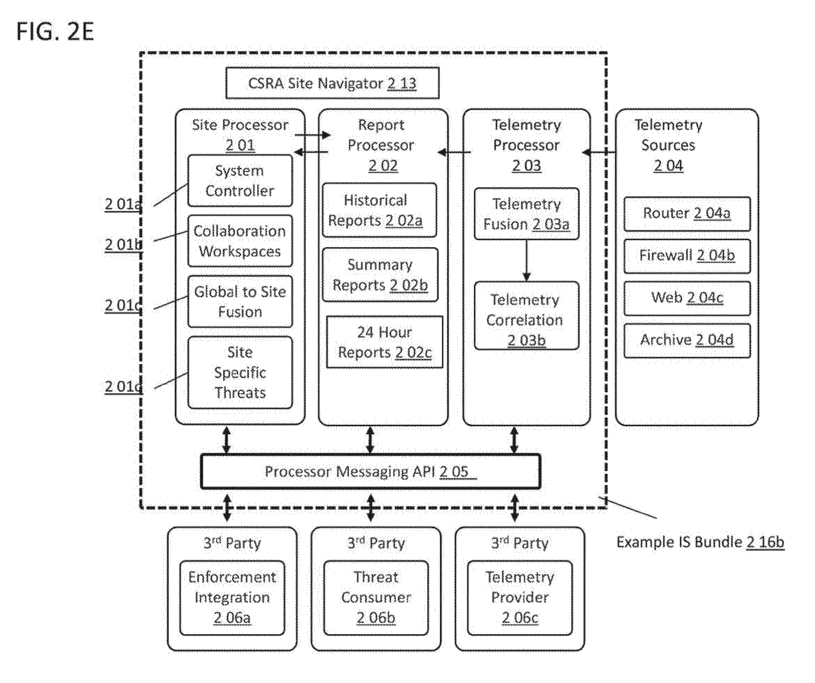

FIGs. 2D-2E are schematic illustrations of example information service bundle(s) at the CSRA site deployment (as shown in FIG. 2A), according to an embodiment. As shown at 216a in FIG. 2D, and 216b in FIG. 2E, the CSRA site navigator 213, and/or various site-deployed processors (e.g., 201-203) may be bundled by an information service platform, such as but not limited to CloudScout® information services, ScoutVision® platform, and/or the like.

FIG. 3A is a schematic block diagram illustrating aspects of data flows at a core processor at a central location, according to an embodiment. The core processor 305 maybe similar to the CSRA core processor 109 in FIG. 1. As shown in FIG. 3, a core processor 305 can be a cyber threat processing component located at a central location, for example, a central data/cloud center that is accessible over the Internet, and may optionally be controlled and administered by a CSRA administrator 301, etc. The core processor 305 can receive various types of data feeds 302, such as but not limited to static threat data from a third party data vendor 302a, open source static data 302b, CSRA's own data feeds via dynamic monitoring and control 302c, and/or the like. The data feeds can interact with the global Internet 313 to include network topology information. The core processor 305 can include a cyber health indexing component to perform cyber health indexing by providing intelligence feed (both threat and/or non-threat) aggregation and fusion at 306 to perform analysis at 309, so that both the global Internet topology 307 and the associated threat indicator confidence 310 are initially calculated. For example, the Internet topology information 307 may be determined using the output of the Cisco^{®} border gateway protocol (BGP), domain name system (DNS), Tracerout, and/or the like. The calculated Internet topology 307 and/or the global threat indicators 310 may be fed to a site processor (e.g., 201 in FIG. 2A), and/or the like, for consumer review and/or editing, e.g., via a distributed API 308, etc. In another example, user edits of the threat indicator confidence score can be received via a feedback API 311.

In some instances, the core processor 305 can fuse the intelligence feeds into a set of cyber health scores (e.g., the threat indicator score) associated with every threat indicator; those threat indicators are then associated with the network topology for the global Internet at the core processor 305. The core processor may calculate threat indicator scores continuously when it receives new intelligence feeds that contribute to the threat indicators and any Internet topology information. Once the core processor 305 has calculated threat indicator scores for all threat indicators and network elements, the core processor 305 asynchronously notifies each site processor (e.g., 201 in FIG. 2A-2E) that a threat indicator confidence fuse file is available for download (e.g., via the global to site fusion module 201c discussed in FIG. 2A).

FIG. 3B is a logic flow diagram illustrating aspects of work flow of a core processor (e.g., 305 in FIG. 3A), according to an embodiment. As shown in FIG. 3B, starting at 321, a core processor can receive data feeds (e.g., see 302 in FIG. 3A), which may include cyber threat indicators and network topology information. The core processor can calculate a threat indicator confidence score for the threat indicator at 322 (e.g., based on characteristics of the threat indicator, such as but not limited to ratings of classification, source, and/or the like attributes of the threat indicator). The core processor can then associate the threat indicator score with one or more network elements based on the network topology information at 323, as the threat indicator can promulgate through the network of elements. Further discussion of associating a threat indicator confidence score with a network element (step 323) can be found in U.S. non-provisional application serial no. 14/339,438, titled "Apparatuses, Methods and Systems for a Real-Time Cyber Threat Indicator Verification Mechanism," filed July 23, 2014, which is herein expressly incorporated by reference.

The core processor can then generate a threat index for the cyber network at 324, e.g., a numeric index value based on the threat indicator confidence scores associated with network elements of the cyber network. The generated threat index may then be sent to a client site at 325, e.g., the site processor 201 in FIGs. 2A-2E.

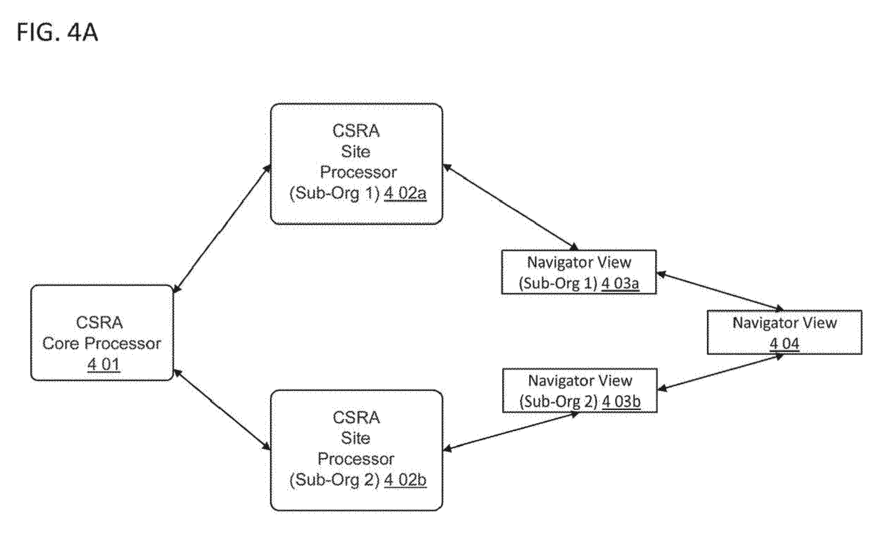

FIGs. 4A-4B are example block diagrams illustrating aspects of organizational structures, according to an embodiment. As shown in FIG. 4A, an organization can deploy a CSRA core processor 401, with different CSRA site processors 402a-b, for example, at different sub-organizations (e.g., an organization can have offices infrastructures at different locations, etc.). In this way, users at different sub-organizations can obtain a navigator view of the cyber threat analytics from different sites at 403a-b. In one implementation, an integrated navigator view 404 can be provided incorporating the different analytics views 403a-b.

As an alternative example shown in FIG. 4B, an organization can deploy multiple core processors 406a-b, with one core processor 406a receiving data feeds 405, and other one or more core processor(s) 406b obtain the data feeds via fuse data replication 407 from the core processor 406a. Or alternatively, the data feeds 405 may be directly transmitted to the site processor 402a. In this way, each core processor 406a-b can be directly connected to a CSRA site processor 402a-b for a sub-organization; and each sub-organization can have a navigator view 403a-b in a similar manner as shown in FIG. 4A.

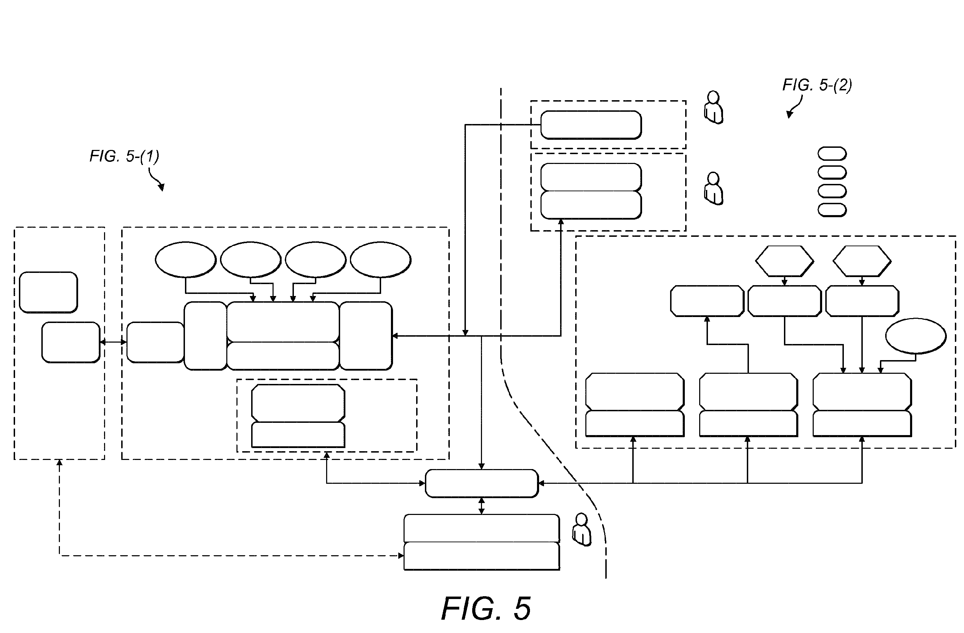

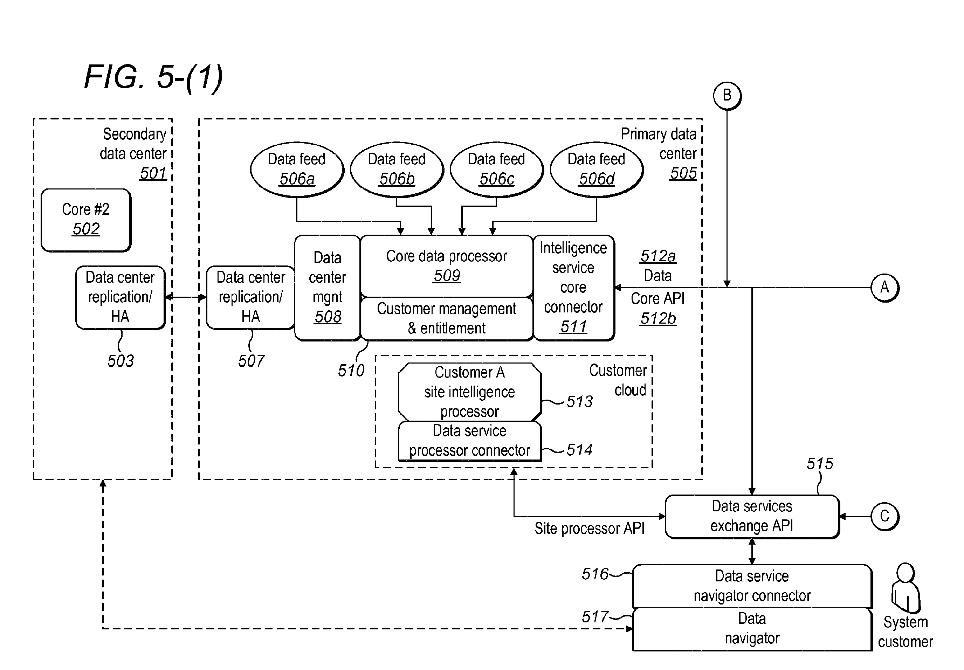

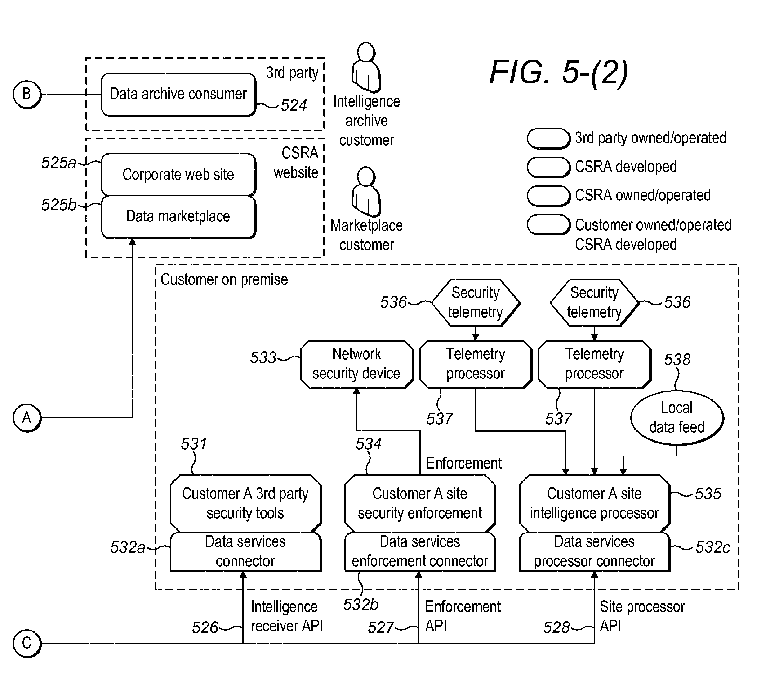

FIG. 5 (including FIGs. 5-(1) and 5-(2)) is an example block diagram illustrating aspects of network architecture of a CSRA system, according to an embodiment (FIGs. 5-(1) and 5-(2) provide an enlarged view of FIG. 5). As shown in FIG. 5-(1), the primary data center 505 can be a central data/cloud center that host a core intelligence processor 509 (e.g., similar to the core processor 305 in FIG. 3). The core intelligence processor 509 obtains data feeds 506a-d (either threat feeds, or non-threat feeds) from data source(s) (e.g., 111 in FIG. 1), and communicate with various functional modules such as data center management 508, customer management and entitlement module 510, and/or the like. In some instances, an data service core connector module 511 receives data feeds 512a via a core API 512b from various entities, such as a third party data archive consumer 524 (shown in FIG. 5-(2)), the CSRA website including the corporate web site 525a and an data marketplace 525b (shown in FIG. 5-(2)).

In some instances, a data center replication module 507 at the primary data center 505 can interface with a corresponding data center replication module 503 at a secondary data center 501, which may in turn process data feeds at a (secondary) core processor 502.

In some instances, the primary data center 505 communicate with a site processor, e.g., a customer site intelligence processor 513 at a customer cloud, which may communicate, via intelligence service processor connectors 514 and intelligence service exchange API 515, with the intelligence navigator connector 516. The intelligence navigator connector 516 connects with the intelligence navigator 517, which can provide a user interface for system customer 520 to view cyber threat analytics generated at the primary data center 505.

As shown in FIG. 5-(2), via the intelligence receiver API 526, enforcement API 527, site processor API 528, a customer on premise (e.g., a customer device located remotely from the primary 505 and/or secondary data center 501, etc.) can receive data (e.g., threat indicator confidence scores, threat analytics, etc.) from the primary data center 505 shown in FIG. 5-(1). For example, the customer on premise can deploy a third party security tool 531 to process threat analytics received via the intelligence service connector 532a. As another example, the site security enforcement module 534 can receive enforcement data via the intelligence services enforcement connector 532b; and can enforce the security rules on a network security device 533 at the customer on premise. As another example, a site intelligence processor 535 (e.g., similar to 201 in FIGs. 2A-2E) can receive threat indicator confidence scores via an intelligence service processor connector 532a, security telemetry data 536 from telemetry processors, local intelligence feeds 538, and/or the like.

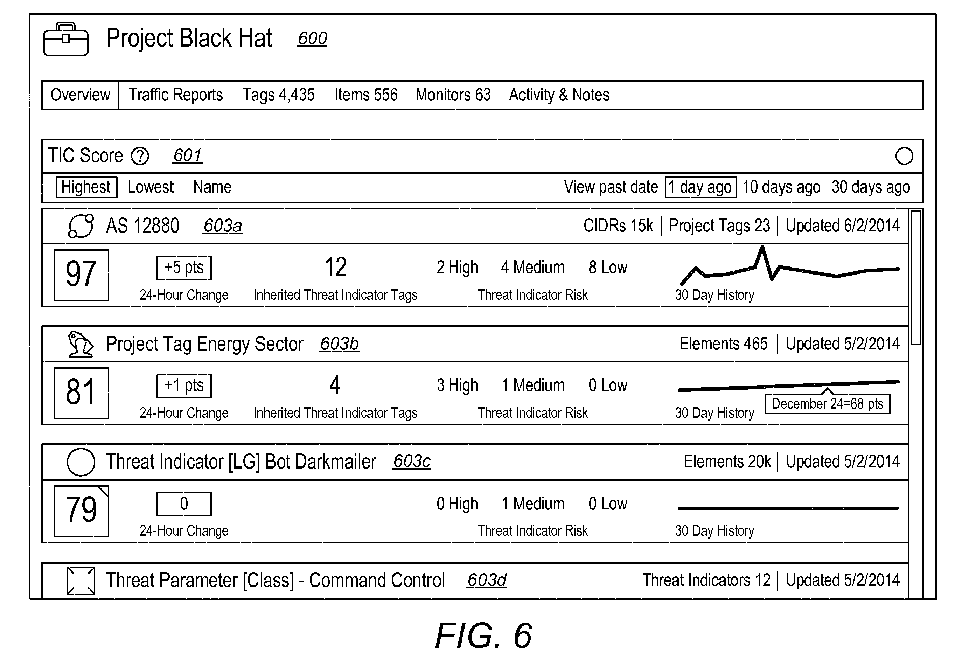

FIG. 6 is an example user interface plot illustrating aspects of a CSRA report processor generated cyber risk assessment user interface, according to an embodiment. As shown in FIG. 6, at the site processor, a customer can choose to edit cyber health assessment (e.g., an assessment project at 600) or elements of the assessment data including a threat indicator score 601, an AS 603a, a project tag 603b, a threat indicator 603c, and/or threat parameters 603d. Alternatively, the customer can choose to edit ratings of source, classification and criticality of the threat indicators assessment. In response to the customer modification, the site processor (e.g., 201 in FIGs. 2A-2E) can send those changes back to the core processor (e.g., 305 in FIG. 3). The core processor can merge those changes from multiple site processors and update the assessment values (e.g., the threat indicator confidence scores, etc.). Additional examples of CSRA cyber risk assessment user interface(s) are provided in U.S. non-provisional application serial no. 14/339,441, titled "Apparatuses, Methods and Systems for a Cyber Threat Confidence Rating Visualization and Editing User Interface," filed July 23, 2014, which is herein expressly incorporated by reference.

It is intended that the systems and methods described herein can be performed by software (executed on hardware), hardware, or a combination thereof. Hardware modules can include, for example, a general-purpose processor, a field programmable gates array (FPGA), and/or an application specific integrated circuit (ASIC). Software modules (executed on hardware) can be expressed in a variety of software languages (e.g., computer code), including C, C++, Java™, Ruby, Python, JavaScript, Perl, PHP, Visual Basic™, and other object-oriented, procedural, or other programming language and development tools. Examples of computer code include, but are not limited to, micro-code or micro-instructions, machine instructions, such as produced by a compiler, code used to produce a web service, and files containing higher-level instructions that are executed by a computer using an interpreter. Additional examples of computer code include, but are not limited to, control signals, encrypted code, and compressed code.

Some embodiments described herein relate to a computer storage product with a non-transitory computer-readable medium (also can be referred to as a non-transitory processor-readable medium) having instructions or computer code thereon for performing various computer-implemented operations. The computer-readable medium (or processor-readable medium) is non-transitory in the sense that it does not include transitory propagating signals per se (e.g., a propagating electromagnetic wave carrying information on a transmission medium such as space or a cable). The media and computer code (also can be referred to as code) may be those designed and constructed for the specific purpose or purposes. Examples of non-transitory computer-readable media include, but are not limited to, magnetic storage media such as hard disks, floppy disks, and magnetic tape; optical storage media such as Compact Disc/Digital Video Discs (CD/DVDs), Compact Disc-Read Only Memories (CD-ROMs), and holographic devices; magneto-optical storage media such as optical disks; carrier wave signal processing modules; and hardware devices that are specially configured to store and execute program code, such as Application-Specific Integrated Circuits (ASICs), Programmable Logic Devices (PLDs), Read-Only Memory (ROM) and Random-Access Memory (RAM) devices.

While various embodiments have been described above, it should be understood that they have been presented by way of example only, and not limitation. Where methods and steps described above indicate certain events occurring in certain order, the ordering of certain steps may be modified. Additionally, certain of the steps may be performed concurrently in a parallel process when possible, as well as performed sequentially as described above. Although various embodiments have been described as having particular features and/or combinations of components, other embodiments are possible having any combination or sub-combination of any features and/or components from any of the embodiments described herein.

## Claims

1. A system, comprising:
a first cyber threat processing component, disposed at a network-accessible compute device,
the first cyber threat processing component calculates a cyber threat indicator confidence score associated with at least one of a cyber threat indicator or associated with a network element after the cyber threat indicator is received; and
a cyber security index component, at the data center, communicatively coupled to the first cyber threat processing component,
the cyber security index component associates the cyber threat indicator confidence score with a network element of a cyber network based on the network topology information after the network topology information is obtained,
the cyber security index component generates a cyber threat index value for the cyber network based on the cyber threat indicator confidence score associated with the network elements after the cyber threat indicator confidence score is associated; and
the cyber security index component sends the cyber threat index value for the cyber network, after the cyber threat index value is generated, to a second cyber threat processing component disposed at a location remote from the data center such that the second cyber threat processing component receives the cyber threat index value for the cyber network, and generates a user interface visualization representing the cyber threat index value.

2. The system of claim 1, wherein the cyber threat network-accessible compute device includes a central data center that is accessible by the second cyber threat processing component via a communication network.

3. The system of claim 1, wherein the cyber security index component is part of the first cyber threat processing component.

4. The system of claim 1, wherein the first cyber threat processing component, when operating, receives data feeds from a data source provider, fuses the data feeds that include same or algorithmically related threat indicators, and continuously calculates the threat indicator confidence score associated with the threat indicator.

5. The system of claim 1, wherein the second cyber threat processing component is disposed with a client compute device.

6. The system of claim 1, wherein the second cyber threat processing component includes a reporting sub-component that generates a report summarizing data received from the first cyber threat processing component after receiving the cyber threat indicator, and
provides an editing user interface allowing a user to edit a characteristic associated with the threat indicator confidence score.

7. The system of claim 1, wherein the second cyber threat processing component includes a telemetry sub-component that ingests security telemetry at the remote site upon receiving the security telemetry.

8. The system of claim 1, wherein the second cyber threat processing component obtains feedback relating to the threat indicator confidence score via a user interface and provides that back to the first cyber threat processing component.

9. A processor-implemented method, comprising:
receiving a cyber threat indicator;
calculating, via a processor, a cyber threat indicator confidence score associated with the cyber threat indicator;
obtaining network topology information of a cyber network,
associating the cyber threat indicator confidence score with at least one network element of the cyber network based on the network topology information;
generating a cyber threat index value for the cyber network based on the cyber threat indicator confidence score associated with the network elements; and
sending a communication message including the cyber threat index value and identifying information of the cyber network to a client compute device.

10. The method of claim 9, wherein receiving the cyber threat indicator is performed at a central data center.

11. The method of claim 9, wherein receiving the cyber threat indicator is performed at a central data center,
the central data center is remotely accessible by the client compute device via a communication network.

12. The method of claim 9, wherein:
receiving the cyber threat indicator is performed at a central data center,
the central data center is remotely accessible by the client compute device via a communication network,
the method further comprising:
continuously generating the cyber threat index value for the cyber network without interruption when a connection between the central data center and the client compute device is disrupted; and
resuming a transmission of the communication message to the client compute device when the connection is recovered.

13. The method of claim 9, further comprising:
receiving data feeds from a target host; and
determining the data feeds include the cyber threat indicator.

14. The method of claim 9, further comprising:
generating a downloadable data file including any of the cyber threat indicator confidence score or the cyber threat index value.

15. The method of claim 9, further comprising:
generating a downloadable data file including any of the cyber threat indicator confidence score or the cyber threat index value; and
asynchronously sending a notification to the client compute device to distribute the downloadable data file.

16. A non-transitory processor-readable medium storing code presenting processor-executable instructions, the code comprising code to cause the processor to:
receive a communication message identifying information of a cyber network and including a cyber threat index value that was generated at a cyber threat network-accessible compute device based on network topology information of the cyber network and a cyber threat indicator confidence score associated with at least one of a cyber threat indicator or a network element;
generate an interactive user interface having a visualization of the cyber threat index value;
receive, via the interactive user interface, a user input indication representing a modification of the cyber threat indicator confidence score; and
dynamically adjust the visualization of the cyber threat index value in response to the user input indication.

17. The medium of claim 16, wherein the communication message is received at a client compute device.

18. The medium of claim 16, wherein:
the communication message is received at a client compute device, and
the cyber threat network-accessible compute device includes a central data center accessible by the client compute device via a communication network.

19. The medium of claim 16, wherein:
the communication message is received at a client compute device,
the cyber threat index value for the cyber network is generated at the cyber threat network-accessible compute device without interruption when a connection between the cyber threat network-accessible compute device and the client compute device is disrupted.

20. The medium of claim 16, wherein:
the communication message is received at a client compute device,
the cyber threat index value for the cyber network is generated at the cyber threat network-accessible compute device without interruption when a connection between the cyber threat network-accessible compute device and the client compute device is disrupted,
the code further comprises code to cause the processor to:
asynchronously receive the communication message when the connection is recovered.

21. The medium of claim 16, wherein:
the communication message is received at a client compute device,
the code further comprises code to cause the processor to:
send a communication indication representing the modification of the cyber threat indicator confidence score to the cyber threat network-accessible compute device.
